# EUROPÄISCHE PATENTSCHRIFT

(11) **EP 0 529 461 B1**
(45) Veröffentlichungstag und Bekanntmachung des Hinweises auf die Patenterteilung: **14.06.1995**
(21) Anmeldenummer: 92114004.2
(22) Anmeldetag: 17.08.1992
(51) Int. Cl.: B62D 21/04, B62D 21/20

(54) **Rahmen für ein landwirtschaftliches Anhängerfahrzeug**
Frame for agricultural trailer
Châssis pour une remorque agricole

(30) Priorität: 29.08.1991 DE 4128730
(43) Veröffentlichungstag der Anmeldung: 03.03.1993
(73) Patentinhaber: Steffinger, Konrad, D-83129 Höslwang (DE)
(72) Erfinder: Steffinger, Konrad, D-83129 Höslwang (DE)
(74) Vertreter: Sandmann, Joachim, Dr.

(56) Entgegenhaltungen:
- AT-B- 159 150
- DE-A- 3 818 200
- DE-C- 809 013
- DE-C- 912 420
- DE-U- 7 402 175
- FR-A- 550 924

## Beschreibung

Die Erfindung bezieht sich auf einen Rahmen für ein landwirtschaftliches Anhängerfahrzeug, der aus einem mittig verlaufenden Längsträger besteht.

Fahrzeugrahmen, die über die anzubringenden Räder am Boden abgestützt werden und der Zweckbestimmung des Fahrzeugs entsprechende Aufbauten oder Einrichtungen tragen, sind allgemein bekannt. Dabei sind üblicherweise zwei im Querabstand angeordnete Längsträger vorgesehen, die mit einem vorderen und einem hinteren Querträger zu einem rechteckigen Rahmen fest verbunden sind. Die horizontale Ausrichtung dieses Rahmens mit den in gleicher Höhenlage jeweils parallel zueinander verlaufenden Längsträgern und Querträgern führt dazu, daß der Rahmen über seine ganze Länge eine der Querträgerlänge entsprechende Breite aufweist.

Bei einem solchen Horizontalrahmen (Breitrahmen) ergeben sich Schwierigkeiten daraus, daß die Räder seitlich außerhalb der Längsträger anzuordnen sind, wobei die seitliche Radfreiheit durch die Außenkanten der Längsträger begrenzt ist. Im Interesse einer rationellen Arbeitsweise geht der Trend zu immer größeren Transportlasten, so daß Fahrzeuge mit hohem Gesamtgewicht auf den landwirtschaftlichen Feldern fahren. Diese erfordern aber breitere Reifen, um den Bodendruck bzw. die Bodenverdichtung nicht über ein Mindestmaß ansteigen zu lassen. Geeignete Breitreifen bzw. breite Räder sind auch erhältlich, ihr Einsatz scheitert aber bei einem breiten Fahrzeugrahmen daran, daß für die Benutzung öffentlicher Straßen maximal zulässige Fahrzeugbreiten eingehalten werden müssen, sofern nicht ausnahmsweise eine Sondererlaubnis besteht.

Aus der DE-C-0 809 013 ist aber auch schon der eingangs beschriebene Rahmen mit einem einzigen mittig verlaufenden Längsträger bekannt. Dort ist der Längsträger ein massiver schwerer Breitflanschträger von H-förmigem Profil, das über die ganze Länge unverändert bleibt und eine etwa gleiche Breite wie Höhe aufweist. Der Längsträger ist jeweils über ein Kugelgelenk mit den beiden Radachsen verbunden, die auf beiden Seiten des Längsträgers und in einem ein Mehrfaches der Trägerbreite ausmachenden Abstand elastisch an einer Ladebrücke abgestützt sind, die auf dem Längsträger aufliegt. Durch diese unstarre Abstützung sind die Radachsen in eine horizontale Mittellage vorgespannt, können jedoch in Anpassung an Bodenunebenheiten Querneigungen gegenüber dem Längsträger ausführen. Die Fahrzeugräder der Radpaare müssen seitlich außerhalb dieser Achsabstützungen mit einem entsprechend großen Querabstand zueinander angeordnet werden, was die Verwendung von Breitreifen einschränkt.

Aus der AT-A-159 150 ist für ein geländegängiges Kraftfahrzeug ein H-Rahmen mit einem mittig verlaufenden Längsträger von etwa quadratischem Querschnitt bekannt, der u-förmig mit offener Oberseite ausgebildet ist und einen vorderen sowie einen hinteren Querträger kreuzt, die sich zwischen den beiden Rädern des vorderen bzw. hinteren Radpaares erstrecken. Der Längsträger weist im Bereich der Querträger und damit der beiden Radachsen eine etwas vergrößerte Höhe auf, wobei die sich kreuzenden Träger im Überschneidungsbereich eine gemeinsame Unterseite aufweisen. Bei dieser Konstruktion ist der Rahmen in seinem mittleren Bereich zwischen den beiden Querträgern zwar schmal ausgeführt, jedoch handelt es sich auch hier um einen Horizontalrahmen (Breitrahmen), bei dem die Vorderräder wie die Hinterräder wiederum jeweils einen der Querträgerlänge entsprechenden Abstand zueinander aufweisen.

Aus der DE-C 38 18 200 ist ein landwirtschaftliches Mehrzweckfahrzeug mit einem Hohlprofilrahmen bekannt, der einen einzigen mittig verlaufenden Längsträger von quadratischem Querschnitt (maximal 50 x 50 cm) aufweist, in dem die starre Hinterradachse und die pendelnd und gelenkt ausgebildete Vorderradachse gelagert sind, die zur Vermeidung eines hohen Bodendrucks breite Räder aufweisen, wobei die Hinterräder einen Durchmesser von mehr als 1,6 m und eine Breite von 1,0 bis 1,3 m aufweisen, so daß eine im wesentlichen nur durch den Längsträger unterbrochene breite Hinterradwalze entsteht. Bei diesem Mehrzweckfahrzeug handelt es sich um einen Selbstfahrer mit Antrieb beider Achsen sowie mit einer Fahrerkabine auf dem vorderen Bereich und Wechselaufbauten auf dem mittleren und hinteren Bereich des Fahrzeugrahmens. Der Längsträger weist ein über seine Länge gleichbleibendes quadratisches Profil auf. Aus Festigkeitsgründen erfordert das Längsträgerprofil eine vergleichsweise große Wandstärke und die Einhaltung von Mindestabmessungen des Querschnittsprofils. Der Rahmen ist daher aufwendig und weist immer noch eine Breite auf, die hinderlich sein kann.

Der Erfindung liegt die Aufgabe zugrunde, den Rahmen so zu gestalten, daß besonders breite Räder eingesetzt werden können, ohne daß die zulässige Fahrzeugbreite überschritten wird und ohne daß die Anbringung funktionsgerechter Aufbauten erschwert ist, wobei eine ausreichende Festigkeit in Verbindung mit einem vergleichsweise geringen Materialaufwand erzielt werden soll.

Diese Aufgabe wird erfindungsgemäß dadurch gelöst, daß der Rahmen aus einem einzigen mittig verlaufenden Längsträger besteht, wobei der Längsträger in hohler geschlossener Kastenbauweise und mit einer Höhe ausgeführt ist, die über die gesamte Länge des nutzlasttragenden Bereichs des Längsträgers größer als seine Breite ist, sich über seine Länge ändert und im Bereich der bzw. jeder Radachse am größten ist, so daß auch der Rahmen weniger breit als hoch ist.

Zweckmäßige Ausgestaltungen und Weiterbildungen des Rahmens ergeben sich aus den Unteransprüchen.

Der erfindungsgemäße Rahmen ist im Gegensatz zu den bisherigen Konstruktionen kein Horizontalrahmen sondern ein Vertikalrahmen, da der den Rahmen bildende Längsträger mit seiner größeren Querschnittsabmessung hochkant angeordnet ist und seitlich an den Längsträger angeschlossene Querträger fehlen. Dabei ist dieser Rahmen universal für alle landwirtschaftlichen Anhängerfahrzeuge einsetzbar, ohne auf bestimmte Fahrzeugarten beschränkt zu sein. Durch den sich über die Längsträgerlänge ändernden Trägerquerschnitt ergibt sich eine den örtlichen Belastungen angepaßte Festigkeit, so daß sich der Längsträger bzw. Rahmen bei ausreichender Festigkeit mit vergleichsweise geringem Materialaufwand und damit vergleichsweise niedrigem Gewicht herstellen läßt. Aus der besonders schmalen Bauweise mit beispielsweise einem nur 15 bis 20 cm breiten Längsträger ergibt sich die Möglichkeit, den Bodendruck verringernde besonders breite Räder einzusetzen, die trotzdem ausreichende Seitenfreiheit gegenüber dem Längsträger haben. Gegebenenfalls mit dem Längsträger verbundene querverlaufende Aufbauträger weisen einen ausreichenden Abstand zu der Radachse bzw. den Radachsen auf, müssen also nicht oberhalb der Räder angeordnet werden, was eine niedrige Anordnung der Aufbauten begünstigt und damit die Standsicherheit erhöht, was insbesondere bei Transportlastaufbauten wichtig ist.

Ausführungsbeispiele der Erfindung sowie Anwendungsmöglichkeiten werden nachfolgend anhand einer schematischen Zeichnung näher erläutert. Es zeigen:
- Fig. 1: in perspektivischer Darstellung einen Fahrzeugrahmen mit einem Längsträger, an dem Aufbauträger und Achstrichter angebracht sind;
- Fig. 2: den Rahmen nach Figur 1 in einer Stirnansicht mit einer Radachse und einem Breitrad;
- Fig. 3: in perspektivischer Darstellung einen abgewandelten Rahmenlängsträger mit einem Innenrohr;
- Figuren 4 und 5: in Seitenansicht und Rückansicht einen einachsigen Häcksel-Sammelwagen mit entsprechendem Rahmen;
- Figuren 6 und 7: in Seitenansicht und Rückansicht einen zweiachsigen Transport-Ladewagen mit entsprechendem Rahmen; und
- Figuren 8 und 9: in Seitenansicht und Rückansicht einen Güllfaßwagen mit einem äußeren Radpaar und zwei inneren Stützradpaaren, die an einem entsprechenden Rahmen angebracht sind.

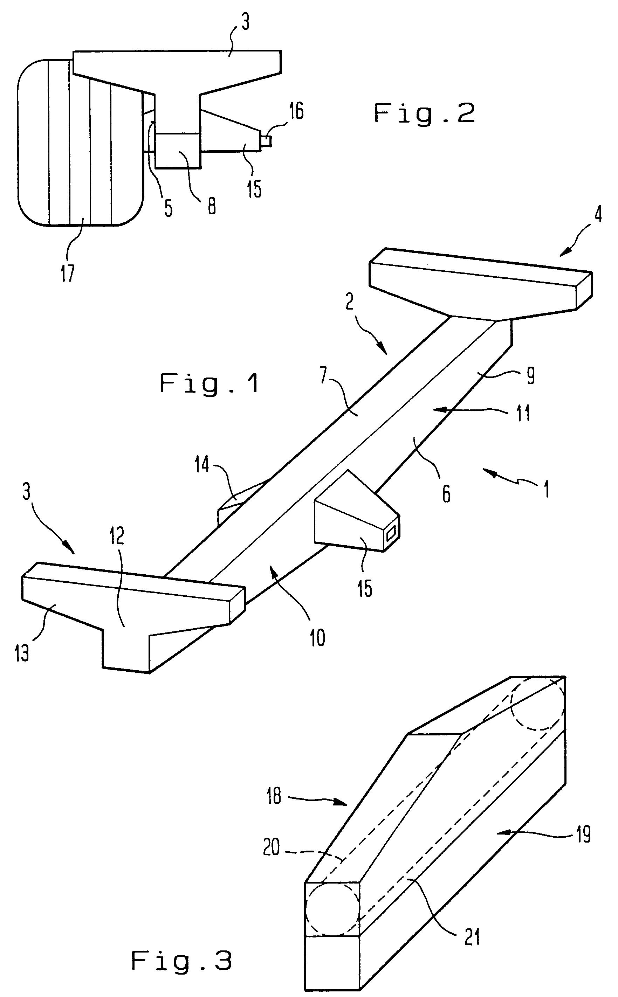

Der in Figur 1 dargestellte Rahmen 1 für ein landwirtschaftliches Anhängerfahrzeug besteht aus einem Längsträger 2, der an seinem einen Ende mit einem vorderen Aufbauträger 3 und an seinem anderen Ende mit einem hinteren Aufbauträger 4 verbunden ist. Der Längsträger 2 ist in hohler Kastenbauweise mit zwei parallelen Seitenwänden 5 und 6, einer ebenen Oberwand 7 sowie einer vorderen Unterwand 8 und einer hinteren Unterwand 9 ausgeführt, die entgegengesetzt geneigt zur Oberwand 7 verlaufen, wobei sie an den Enden des Längsträgers 2 den geringsten Abstand zur Oberwand 7 aufweisen. Dementsprechend ist der Längsträger 2 in einen vorderen Längsträgerabschnitt 10 und einen hinteren Längsträgerabschnitt 11 gegliedert, die jeweils einen sich kontinuierlich ändernden rechteckigen Querschnitt von größerer Höhe als Breite aufweisen, wobei der Längsträger 2 in Seitenansicht etwa die Form eines flachen Dreiecks aufweist. Somit weist der Rahmen 1 in einem mittleren Längenbereich die größte Profilhöhe und damit Festigkeit auf. Dieses Ergebnis läßt sich natürlich auch dadurch erreichen, daß die Oberwand 7 entgegen der Darstellung in zwei dachförmig geneigte Abschnitte unterteilt ist. Ein entsprechender Festigkeitsverlauf des Rahmens 1 kann schließlich auch durch eine (beidseitige) Profilverbreiterung zur Rahmenmitte hin erzielt werden.

Die Aufbauträger 3 und 4 weisen eine ähnliche Form wie der Längsträger 2 auf. Sie verlaufen oberhalb des Längsträgers, sind mit einem Mittelabschnitt 12 auf jeweils einem Ende des Längsträgers 2 abgestützt und weisen zwei entgegengesetzt in Querrichtung vorspringende, sich in ihrer Höhe nach außen verjüngende Endabschnitte 13 mit einer gegenüber der ebenen Oberseite geneigt verlaufenden Unterseite auf.

Im die größte Höhe aufweisenden mittleren Bereich des Längsträgers 2 sind auf gegenüberliegenden Seiten des Längsträgers 2 zwei aufeinander ausgerichtete Achstrichter 14 und 15 angeordnet. Die Achstrichter 14 und 15 dienen der Anbringung einer Radachse 16 für zwei luftbereifte breite Räder 17, wie es aus Figur 2 zu ersehen ist. Dementsprechend handelt es sich beim Rahmen 1 um einen Einachsrahmen.

Der Längsträger 2 und die beiden Aufbauträger 3 und 4 sind aus Blechen zu einer Einheit zusammengeschweißt. Die Schweißarbeiten sollten möglichst nur in Längsrichtung erfolgen.

Figur 3 zeigt einen etwas abgewandelten Rahmen 18 mit einem Längsträger 19, der aus einem runden Innenrohr 20 und einem kastenförmigen Außenrohr 21 besteht, wobei die Konstruktion durch zwischen die Rohre 20 und 21 eingeschweißte Querstege oder Zwischenwände (nicht dargestellt) versteift ist. Auch der Rahmen 18 ist als vertikaler Schmalrahmen mit größerer Höhe als Breite ausgebildet und weist wiederum eine etwa dreieckförmige Seitenansicht auf, wobei hier jedoch die Unterseite eben und die Oberseite dachförmig ausgebildet ist. Natürlich kann der Rahmen 18 auch in umgekehrter Orientierung verwendet werden.

Alternativ kann auch ein (nicht dargestellter) Rahmen vorgesehen sein, der aus zwei oder mehr übereinander angeordneten und durch Verschweißen miteinander verbundenen Längsrohren hergestellt ist.

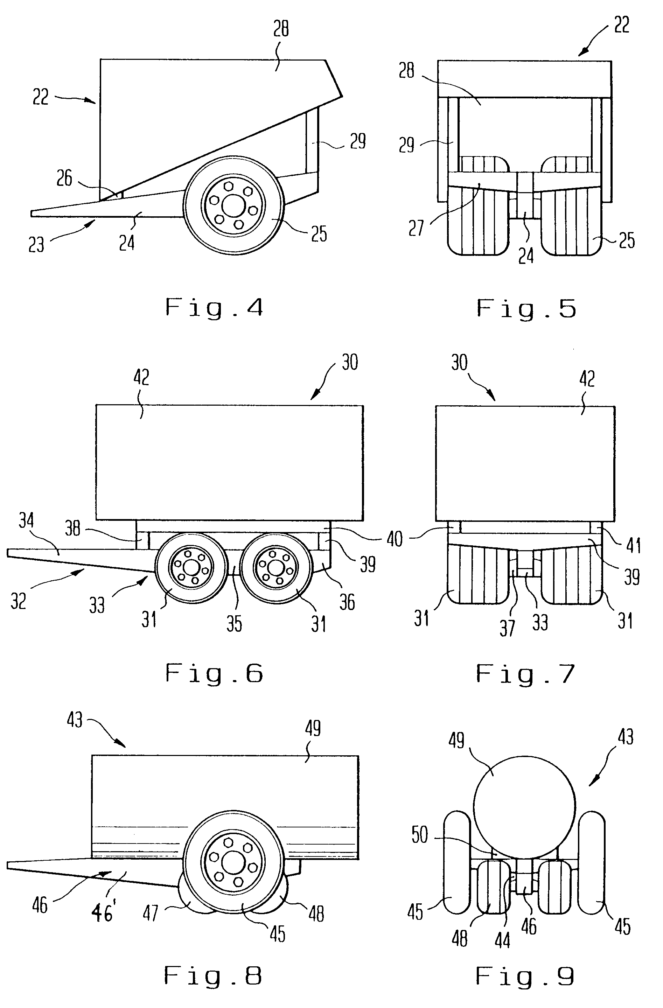

Figuren 4 und 5 zeigen einen einachsigen Häcksel-Sammelwagen 22 mit einem langgestreckten schmalen zentralen Rahmen 23, der von einem kastenförmigen Längsträger 24 gebildet und über zwei breite Räder 25 am Boden abgestützt ist. An den Rahmen 23 sind oberseitig ein vorderer Aufbauträger 26 und ein hinterer Aufbauträger 27 angeschlossen, die den Sammelbehälter 28 abstützen - und zwar an seinem hinteren Ende über Stützen 29. Der geneigte Boden des Sammelbehälters 28 erstreckt sich im wesentlichen über die gesamte Fahrzeugbreite und verläuft nahezu tangential in geringem Abstand zu den beiden Rädern 25.

Der Transport-Ladewagen 30 gemäß Figuren 6 und 7 ist als Zweiachser mit vier breiten Rädern 31 ausgeführt. Zwischen den Radpaaren erstreckt sich ein schmaler Rahmen 32 wiederum in Form eines Längsträgers 33, der einen vorderen Abschnitt 34, einen mittleren Abschnitt 35 und einen hinteren Abschnitt 36 aufweist. Der mittlere Abschnitt 35 des Längsträgers 33 weist ein Rechteckprofil von gleichbleibender und die Breite übersteigender Höhe auf, während sich die Abschnitte 34 und 36 in der Höhe zu den Längsträgerenden hin verjüngen. Die beiden Radachsen bzw. Achstrichter 37 sind an den Enden des mittleren Abschnitts 35 im Übergangsbereich zu den Abschnitten 34 bzw. 36 angeordnet. Ein vorderer Aufbauträger 38 und ein hinterer Aufbauträger 39 sind fest mit der Oberseite des Längsträgers 33 verbunden. Zwei Tragbalken 40 und 41 stützen sich mit ihren Enden am vorderen Aufbauträger 38 bzw. am hinteren Aufbauträger 39 ab und tragen den quaderförmigen Ladewagenaufbau 42, dessen horizontaler Boden in geringem Abstand oberhalb der Räder 31 verläuft.

Beim Güllefaßwagen 43 gemäß Figuren 8 und 9 ist eine Rahmenkombination mit dem üblichen Breitrahmen 44 mit zwei schmalen äußeren Rädern 45 von großem Durchmesser und aus einem kastenförmigen langgestreckten Schmalrahmen 46 (Längsträger 46') vorgesehen, der zwei in Längsrichtung zueinander versetzte Paare von breiten inneren Rädern 47 bzw. 48 trägt. Das langgestreckte, im wesentlichen horizontale Güllefaß 49 stützt sich auf dem Schmalrahmen 46 und zusätzlich über Auflagestücke 50 auch auf dem Breitrahmen 44 ab. Dabei sind wie dargestellt die kleinen aber breiten inneren Räder 47 und 48 unter und die großen aber schmalen Räder 45 seitlich neben dem Güllefaß 49 angeordnet.

Wegen der großvolumigen Reifen und der vergleichsweise geringen Fahrgeschwindigkeit sind gesonderte Maßnahmen zur Abfederung nicht erforderlich. Ein gewisser Federungseffekt wird ohnehin durch die Luftbereifung in Verbindung mit dem jeweiligen Reifendruck erzielt. Bei der kombinierten Bauweise gemäß Figuren 8 und 9 ist es zweckmäßig, die äußeren Räder 45 mit einem höheren und die inneren Räder 47 und 48 mit einem niedrigeren Luftdruck aufzupumpen.

## Patentansprüche

1. Rahmen für ein landwirtschaftliches Anhängerfahrzeug, der aus einem einzigen mittig verlaufenden Längsträger (2, 19, 24, 33, 46') besteht, **dadurch gekennzeichnet**, daß der Längsträger (2, 19, 24, 33, 46') in hohler geschlossener Kastenbauweise und mit einer Höhe ausgeführt ist, die über die gesamte Länge des nutzlasttragenden Bereichs des Längsträgers größer als seine Breite ist, sich über seine Länge ändert und im Bereich der bzw. jeder Radachse (16) am größten ist, so daß auch der Rahmen (1, 18, 23, 32, 46) weniger breit als hoch ist.

2. Rahmen nach Anspruch 1, **dadurch gekennzeichnet,** daß der Längsträger (2, 24, 33, 46') eine ebene Oberwand (7) sowie einen vorderen Längsträgerabschnitt (10, 34) und einen hinteren Längsträgerabschnitt (11, 36) mit jeweils in Längsrichtung zur Oberwand (7) geneigten Unterwänden (8, 9) aufweist, die entgegengesetzt geneigt sind.

3. Rahmen nach Anspruch 1 oder 2, insbesondere für ein Zweiachs-Anhängerfahrzeug (30), **dadurch gekennzeichnet,** daß ein mittlerer Längsträgerabschnitt (35) von größter und gleichbleibender Höhe vorgesehen ist.

4. Rahmen nach einem der Ansprüche 1 bis 3, **dadurch gekennzeichnet,** daß am Längsträger (2, 24, 33, 46') in Querrichtung vorspringende und sich zu ihrem freien Ende hin verjüngende Achstrichter (14, 15, 37) zur Anbringung und Lagerung der Räder (17, 31, 47, 48) angeschlossen sind.

5. Rahmen nach einem der Ansprüche 1 bis 4, **dadurch gekennzeichnet,** daß dem Rahmen (1, 23, 32) ein vorderer Aufbauträger (3, 26, 38) und ein hinterer Aufbauträger (4, 27, 39) zugeordnet sind, die oberhalb des Längsträgers (2, 24, 33) angeordnet und auf diesem abgestützt sind.

6. Rahmen nach Anspruch 5, **dadurch gekennzeichnet,** daß die beiden Aufbauträger (3 und 4, 26 und 27, 38 und 39) in ihrem mit dem Längsträger (2, 24, 33) verbundenen Mittelabschnitt (12) ihre größte Höhe aufweisen.

7. Rahmen nach Anspruch 6, **dadurch gekennzeichnet,** daß die Aufbauträger (3, 4, 26, 27, 38, 39) eine ebene Oberseite sowie zu beiden Seiten ihres Mittelabschnitts (12) jeweils einen Endabschnitt (13) aufweisen, dessen Unterseite in Erstreckungsrichtung nach außen zur Oberseite hin ansteigt.

8. Rahmen nach einem der Ansprüche 1 bis 7, **dadurch gekennzeichnet,** daß der Längsträger (19) durch wenigstens ein längsverlaufendes Innenrohr (20) und durch Querstege zwischen dem Innenrohr (20) und dem Außenrohr (21) versteift ist.

9. Rahmen nach Anspruch 8, **dadurch gekennzeichnet,** daß das Innenrohr (20) ein Rundrohr ist.

10. Rahmen nach einem der Ansprüche 1 bis 7, **dadurch gekennzeichnet,** daß der Längsträger von wenigstens zwei übereinander angeordneten und miteinander verbundenen Längsrohren gebildet ist.

11. Rahmen nach einem der Ansprüche 1 bis 9, **dadurch gekennzeichnet,** daß er als Schweißkonstruktion ausgeführt ist.

## Claims

1. Frame for an agricultural trailer which comprises a single centrally-extending longitudinal carrier (2, 19, 24, 33, 46'), characterised in that the longitudinal carrier (2, 19, 24, 33, 46') is constructed as a hollow enclosed box body structure having a height which, over the entire length of the area of the longitudinal carrier (2, 19, 24, 33, 46') carrying the useful load, is greater than its length, whose height changes along its length, and is greatest in the region of the wheel axle (16), or of each wheel axle (16), so that the width of the frame (1, 18, 23, 32, 46) is less than its height.

2. Frame according to claim 1, characterised in that the longitudinal carrier (2, 24, 33, 46') has a flat upper wall (7), a forward longitudinal carrier portion (10. 34) and a rear longitudinal carrier portion (11, 36), with lower walls (8, 9) inclined in the longitudinal direction to the upper wall (7), said lower walls (8, 9) being inclined in opposite directions.

3. Frame according to claim 1 or 2, more especially for a double-axle trailer (30), characterised in that a central longitudinal carrier portion (35) of maximum and constant height is provided.

4. Frame according to one of claims 1 to 3, characterised in that there are connected to the longitudinal carrier (2, 24, 33, 46') axle hubs (14, 15, 37) projecting in the transverse direction and tapering towards their free end, for attachment and bearing of the wheels (17, 31, 47, 48).

5. Frame according to one of claims 1 to 4, characterised in that there are associated with the frame (1, 23, 32) a forward superstructure carrier (3, 26, 38) and a rear superstructure carrier (14, 27, 39), which are disposed above the longitudinal carrier (2, 24, 33,), and are supported thereon.

6. Frame according to claim 5, characterised in that both superstructure carriers (3 and 4, 26 and 27, 38 and 39) are at their greatest height in their central portion (12) connected to the longitudinal carrier (2, 24, 33, ).

7. Frame according to claim 6, characterised in that the superstructure carriers (3, 4, 26, 27, 38, 39) have a flat upper side, and have on both sides of their central portion (12) respective terminal portions (13), whose undersides are inclined upwards in the direction of extension towards the upper side.

8. Frame according to one of claims 1 to 7, characterised in that the longitudinal carrier (19) is reinforced by at least one longitudinally-extending internal tube (20), and by transverse webs between the internal tube (20) and the external tube (21).

9. Frame according to claim 8, characterised in that the internal tube (20) is a circular-section tube.

10. Frame according to one of claims 1 to 7, characterised in that the longitudinal carrier is formed by at least two longitudinal tubes which are disposed one above the other, and are connected together.

11. Frame according to one of claims 1 to 9, characterised in that it is constructed as a welded structure.

## Revendications

1. Châssis relatif à un véhicule agricole à remorque, constitué par un longeron unique central (2, 19, 24, 33, 46'), **caractérisé en ce que** le longeron (2, 19, 24, 33, 46') est exécuté sous forme de caisson creux fermé et avec une hauteur dépassant sa largeur, sur toute la longueur de la partie supportant la charge utile du longeron, variant sur sa longueur et étant la plus élevée au droit de l'essieu respectivement chaque essieu (16), de manière que le châssis (1, 18, 23, 32, 46) présente, lui aussi, une largeur inférieure à sa hauteur.

2. Châssis selon la revendication 1, **caractérisé en ce que** le longeron (2, 24, 33, 46') présente une paroi supérieure (7) plane ainsi qu'une section avant de longeron (10, 34) et une section arrière de longeron (11, 36) ayant des parois inférieures (8, 9) inclinées chacune dans le sens longitudinal vers la paroi supérieure (7), dont l'inclinaison est opposée l'une par rapport à l'autre.

3. Châssis selon la revendication 1 ou 2, notamment pour un véhicule à remorque (30) à deux essieux**, caractérisé en ce qu'**une section de longeron médiane (35) d'hauteur maximale et constante est prévue.

4. Châssis selon l'une des revendications 1 à 3, **caractérisé en ce que** des trompettes (14, 15, 37) effilées vers leur extrémité libre et transversalement en saillie sont raccordées sur le longeron (2, 24, 33, 46') pour recevoir et loger les roues (17, 31, 47, 48).

5. Châssis selon l'une des revendications 1 à 4, **caractérisé en ce que** le châssis (1, 23, 32) présente un support de structure avant (3, 26, 38) et un support de structure arrière (4, 27, 39) disposés au-dessus du longeron (2, 24, 33) et supportés par celui-ci.

6. Châssis selon la revendication 5, **caractérisé en ce que** les deux supports de structure (3 et 4, 26 et 27, 38 et 39) présentent leur hauteur maximale dans leur section centrale (12) communiquant avec le longeron (2, 24, 33).

7. Châssis selon la revendication 6, **caractérisé en ce que** les supports de structure (3, 4, 26, 27, 38, 39) comportent une face supérieure plane ainsi que, des deux côtés de leur section centrale (12), une partie terminale (13) chacune dont la face inférieure présente une inclinaison remontant, dans le sens de son étendue, vers l'extérieur vers le haut.

8. Châssis selon l'une des revendications 1 à 7, **caractérisé en ce que** le longeron (19) est raidi par au moins un tuvau intérieur (20) s'étendant longitudinalement et des traverses s'étendant entre le tuyau intérieur (20) et le tuyau extérieur (21).

9. Châssis selon la revendication 8, **caractérisé en ce que** le tuyau intérieur (20) est un tuyau cylindrique.

10. Châssis selon l'une des revendications 1 à 7, **caractérisé en ce que** le longeron est constitué par au moins deux tuyaux longitudinaux disposés l'un au-dessus de l'autre et reliés entre eux.

11. Châssis selon l'une des revendications 1 à 9, **caractérisé en ce qu'**il est réalisé sous forme d'une construction soudée.
